## Europäisches Patentamt
## European Patent Office
## Office européen des brevets

(19)

(11) Numéro de publication: **0 028 988**
**B1**

# FASCICULE DE BREVET EUROPEEN

(12)

(45) Date de publication du fascicule du brevet:
07.09.83

(51) Int. Cl.³: **C 03 B 33/04**

(21) Numéro de dépôt: **80401618.6**

(22) Date de dépôt: **13.11.80**

(54) **Procédé et dispositif pour la séparation des marges sur une feuille de verre porteuse d'une ligne de découpe à contour fermé.**

(30) Priorité: **13.11.79 DE 2945682**

(43) Date de publication de la demande:
**20.05.81 Bulletin 81/20**

(45) Mention de la délivrance du brevet:
**07.09.83 Bulletin 83/36**

(84) Etats contractants désignés:
**BE FR GB IT SE**

(56) Documents cités:
**DE-A-2 826 694**
**FR-A-2 179 708**
**FR-A-2 379 490**
**US-A-3 532 259**

(73) Titulaire: **SAINT-GOBAIN VITRAGE, Les Miroirs 18, avenue d'Alsace, F-92400 Courbevoie (FR)**

(72) Inventeur: **Siemens, Walter, Hillenbergerstrasse 34, Herzogenrath (DE)**
Inventeur: **Guenther, Ulrich, Noppenbergerstrasse 24, Herzogenrath (DE)**
Inventeur: **Bartusel, Karl Rudolf, An der Waldmeisterhütte 9, Stolberg (DE)**

(74) Mandataire: **Eudes, Marcel et al, Saint-Gobain Recherche 39 Quai Lucien Lefranc, F-93304 Aubervilliers Cedex (FR)**

BUNDESDRUCKEREI BERLIN

## Procédé et dispositif pour la separation des marges sur une feuille de verre porteuse d'une ligne de découpe à contour fermé

L'invention a pour objet un procédé de rompage simultané des marges d'une feuille de verre porteuse d'une ligne de découpe à contour fermé, selon lequel cette feuille, reposant entièrement sur une surface plane et élastique, est soumise dans la zone du contour de découpe à des contraintes de flexion, sous la poussée d'outils mobiles verticalement, disposés à l'intérieur et à l'extérieur du contour de découpe et au-dessus de la feuille de verre (US-A-3 532 259).

On connait, tout particulièrement pour la fabrication de vitrages automobiles, divers procédés de découpe mécanique et automatique des feuilles de verre, selon lesquels on exerce sur la feuille, dans la zone de la ligne de découpe, des contraintes de flexion qui détachent les bandes marginales. Dans la plupart d'entre eux, le primitif porteur du tracé de découpe est soutenu dans la zone située sous le trait de découpe par un appui rigide et les contraintes de flexion résultent de l'action d'outils de pressage qui s'abaissent de part et d'autre de cet appui rigide. De tels procédés sont décrits, par exemple, dans les publications de demandes de brevets allemandes DE-A-2 724 238 et DE-A-2 826 694 ou le brevet américain US-A-3 913 812.

Tous les procédés qui utilisent ce principe exigent l'emploi de montages d'appui d'une forme correspondant à celle des volumes de verre à découper, de sorte qu'il faut modifier l'appareillage à chaque changement de modèle pour l'adapter à la nouvelle forme désirée. En règle générale, on utilise des séries de gabarits rigides, ce qui limite la perte de temps pour l'adaptation du dispositif à chaque changement de modèle mais entraîne une dépense considérable pour la fabrication des outils. On ne peut enfin découper ainsi que des séries de volumes possèdant un même contour.

Il existe également un procédé dont l'adaptation à chaque forme de vitrages n'exige pas un montage particulier mais selon lequel la feuille de verre repose entièrement sur la face d'appui flexible élastique d'une bande transporteuse glissant sur une plaque métallique plane (US-A-3 532 259). Ici encore, les contraintes de flexion sont exercées par des outils qui descendent verticalement. Ces outils, dont la portée qui vient en contact avec la surface du verre prossède un diamètre de 30 mm, sont disposés de façon à agir à cheval sur la ligne de découpe. La face de la feuille de verre qui repose sur l'appui élastique se trouve ainsi mise sous tension, et la face porteuse de la ligne de découpe elle-même en compression; le moment de flexion s'exerce donc dans un sens contraire à celui rencontré dans les procédés précédents. Or l'expérience montre qu'un tel moment de flexion négatif ne permet pas d'obtenir une rupture commode et propre, en particulier lorsqu'on travaille sur des feuilles de verre d'une épaisseur supérieure à 3 mm.

Partant de ce procédé dans lequel la feuille de verre repose entièrement sur un support élastique plan sans emploi d'un montage de forme rigide adapté au dessin de la découpe, l'invention se propose de le perfectionner de façon à obtenir une arête de découpe nette, exempte des spliures, à le rendre utilisable pour des feuilles de verre d'épaisseur variable et à simplifier son emploi quant au changement de modèle des vitrages et à la mise en place des primitifs au poste de rompage.

Si l'on se réfère au procédé précité (voir US-A-3 532 259), l'invention s'en distingue en ce que l'on abaisse vers la face supérieure de la feuille de verre des outils comportant chacun un ensemble de poussoirs rapprochés, indépendants les uns des autres et montés souplement de façon à exercer sur les marges, à l'extérieur du contour de découpe, par l'emploi d'un nombre de poussoirs supérieur, une pression plus élevée que celle exercée sur la feuille par d'autres poussoirs disposés à l'intérieur de ce contour, déformant la couche d'appui de façon plus importante à l'extérieur de ce contour et mettant ainsi la face qui porte le tracé en traction tout le long de celui-ci au moment de la rupture.

C'est donc une charge inégalement répartie qui applique le moment de flexion nécessaire au primitif reposant par toute sa surface sur un appui élastique de sorte que la région marginale s'enfonce plus profondément dans le support que la partie centrale de la feuille. On crée ainsi, sur un support entièrement homogène et sans appui auxiliaire au voisinage de la ligne de cécoupe, un moment de flexion qui facilite la rupture et conduit à une meilleure qualité d'arêtes.

Outre la bonne qualité des arêtes, l'invention apporte d'autres avantages importants qui recommandent particulièrement son emploi dans une ligne de fabrication automatique: étant donné que dans une direction radiale, c'est à dire transversalement à la ligne de découpe, il existe toujours plusieurs poussoirs disposés les uns derrière les autres et dont l'écartement mutuel est inférieur à la largeur de la marge que l'on cherche à détacher, on peut, dans certaines limites, découper des volumes possédant les uns et les autres des formes différentes sans modifier la position des poussoirs, aussi longtemps que la marge se trouve prise sous ces derniers. Il n'est donc pas nécessaire que les primitifs à rompre occupent toujours strictement la même position à la station de rompage et de petits écarts sont sans gravité.

D'autre part, les temps nécessaires à l'adaptation du dispositif sont extrêmement brefs puisqu'il n'y a aucune modification à apporter à l'appui inférieur de la feuille de verre et que les organes supérieurs sont eux aussi d'un emploi

·rès souple.

Enfin, il s'est aussi révélé que le dispositif selon l'invention permettait de rompre automatiquement des feuilles que leur forme ne permettait pas de découper avec les dispositifs automatiques connus, par exemple des feuilles possédant des tracés à zones anguleuses plus ou moins accentuées.

Le dispositif selon l'invention, comparé à un dispositif de rompage à bande d'appui et de transport flexible et élastique passant sur une plaque de support plane, équipé d'outils de pressage placés au-dessus de la bande, s'en distingue par des outils de pressage formés de poussoirs indépendants les uns des autres et mobiles verticalement, au nombre de 5 à 20 par dm2.

Les poussoirs sont appliqués sous une pression qui dépend de l'épaisseur et du type de feuille de verre à découper; de façon avantageuse, cette pression sera exercée pneumatiquement sur les divers poussoirs. La force agissant sur chacun d'eux est facile à déterminer par quelques essais; par exemple, la pression sera telle que chacun exerce une force minimale de 25 N lorsque la feuille de verre à une épaisseur de 4,6 mm et une force minimale de 100 N quand celle-ci atteint une épaisseur de 8 mm. La couche d'appui flexible élastique est avantageusement constituée par une bande transporteuse continue, en matière plastique, et plus particulièrement en élastomère tel que le caoutchouc; elle doit être aussi résistante que possible aux coupures et aux déchirures pour ne pas être détériorée par les chutes de verre; elle possèdera une capacité de déformation élastique suffisante pour céder sous la feuille de verre sous la pression des poussoirs. Une bande synthétique de 5 mm d'épaisseur, à armature de polyester, telle que celle fabriquée par la firme SIEGLIND à Hanovre, sous la dénomination E8/2UO V20 ARH, s'est révélée particulièrement bien adaptée.

L'invention n'exige pas l'emploi d'une bande transporteuse; on peut aussi, par exemple transporter les volumes sur un plateau tournant équipé d'un tapis circulaire. Les poussoirs sont avantageusement disposés en groupes dont chacun est monté dans un boîtier propre. Ces boîtiers sont fixés sur un plateau mobile verticalement et placés sur ce plateau en fonction du dessin de la ligne de découpe pour que, de préférence, la majeure partie des poussoirs, quatre au moins par groupe, se trouve à l'extérieur de la ligne de découpe, c'est à dire aus dessus de la zone marginale définie par cette dernière. Il est avantageux de prévoir au moins quatre boîtiers et, pour les volumes les plus petits, il est préférable qu'un boîtier, au moins, soit placé dans la zone centrale à l'intérieur du contour. Pour les volumes de plus grandes dimensions, la présence de ce boîtier n'est généralement pas nécessaire. Les poussoirs sont constitués d'arbres coulissants repoussés par des ressorts ou par de l'air comprimé. Leur extrémité située à l'intérieur du boîtier est par exemple élargie pour former un piston qui coulisse dans un cylindre, et que le ressort ou l'air comprimé repousse vers l'extérieur; leur tête est avantageusement constituée de matière plastique, et interchangeable.

Une mise en oeuvre avantageuse est décrite ci-dessous, en liaison avec les dessins qui constituent:

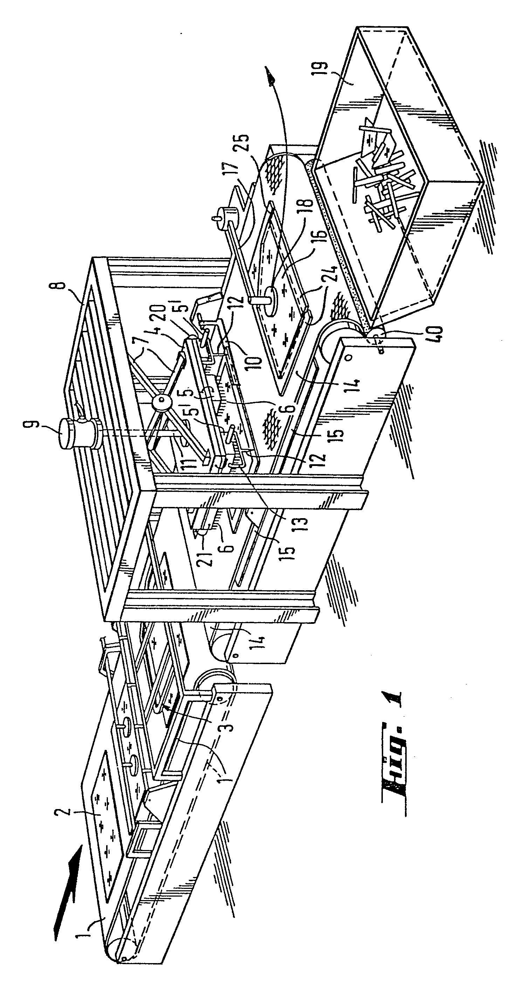

Figure 1: une perspective d'ensemble du dispositif de rompage des marges de feuilles de verre selon l'invention.

Figure 2: une vue longitudinale d'une partie du dispositif de la figure 1, représentée en coupe partielle.

Figure 3: un détail montrant, en coupe partielle, une perspective d'un boîtier porteur de poussoirs.

Figure 4: une vue en plan montrant la disposition des outils de pressage.

Figure 5: une coupe horizontale à travers l'un des boîtiers.

Figure 6: en coupe, un boîtier avant rupture des marges.

Figure 7: en vue latérale, le même boîtier pendant la rupture.

La bande transporteuse 1 sur laquelle on place un à des primitifs 2 les dirige vers le dispositif de traçage en forme 3 où le contour de découpe souhaité sera tracé à leur surface.

Chaque volume est ensuite transporté au poste de rompage sous un plateau 4 porteur de boîtiers 5, 5' munis de poussoirs 6, et montés par l'intermédiaire d'un pantographe 7 sur un cadre 8 solidaire du bâti de la machine de façon à pouvoir monter et descendre sous l'action d'un vérin 9. Une règle de butée effaçable 10 détermine la position du primitif 2 au poste de rompage.

Sur chacun des boîtiers 5' qui se trouvent dans les angles du plateau est monté un outil de découpe 12, destiné à tracer sur la bande marginale un trait de découpe qui la subdivise lorsque c'est nécessaire. Des essais permettent de déterminer rapidement dans chaque cas particulier, si la présence de ce trait est nécessaire pour que la zone correspondante de la marge se détache ou si, ce qui est fréquent, ce trait est superflu. L'outil de découpe 12 est monté sur un étrier 13, tournant autour d'un axe horizontal sur le boîtier 5' et, pour tracer le trait correspondant, il pivote sous l'effet d'un mécanisme non représenté, puis reprend immédiatement sa position de repos, relevé, de sorte qu'il ne gêne pas les poussoirs 6 lorsque ceux-ci descendent vers le volume de verre. La position de l'outil 12 et sa direction de découpe sont déterminés par la place et l'orientation du boîtier 5' auquel il appartient.

Toutefois, il reste bien entendu possible d'exécuter les traits de découpe auxiliaires au poste de traçage en forme 3, de façon classique, à l'aide d'un outil approprié.

A la station de rompage, le primitif 2 repose sur une bande transporteuse élastique 14 en appui sur une table de travail 15, fixe et lisse, avantageusement constituée d'une plaque métallique plane.

Une fois séparé des marges, le vitrage de forme 16 est prélevé sur la bande transporteuse 12 et évacué, par un organe de déchargement constitué d'un bras tournant 17 porteur d'une ventouse 18. Les chutes tombant de la bande transporteuse 14 sont recueillies dans une benne 19, et une brosse tournante 40 nettoie la bande 14 des débris et éclats.

Chacun des boîtiers 5, 5' est alimenté en air comprimé par un raccord flexible 21 relié à une canalisation d'air comprimé 20 qui court autour du plateau 4.

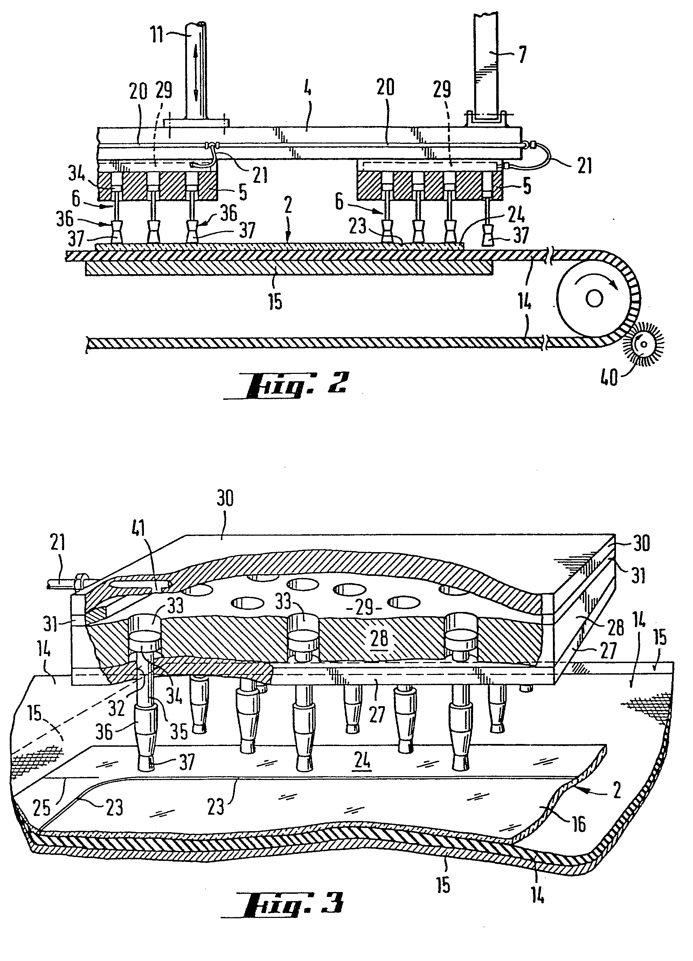

La figure 2 montre une coupe du dispositif de rompage placé au dessus du primitif 2 arrêté sur la bande transporteuse 14, les poussoirs 6 amenés au contact de la surface de ce primitif.

De préférence, les boîtiers 5 sont montés sous le plateau mobile 4 en position réglable. Il est avantageux que ce plateau constitue l'armature d'un électro-aimant, la platine des boîtiers 5 étant ferro-magnétique, car il devient alors très facile de monter ces derniers sur la face inférieure du plateau mobile 4 en toute position voulue, en fonction du dessin du vitrage final, de façon que le plus grand nombre possible de poussoirs 6 se trouvent en appui à l'extérieur du contour de découpe 23.

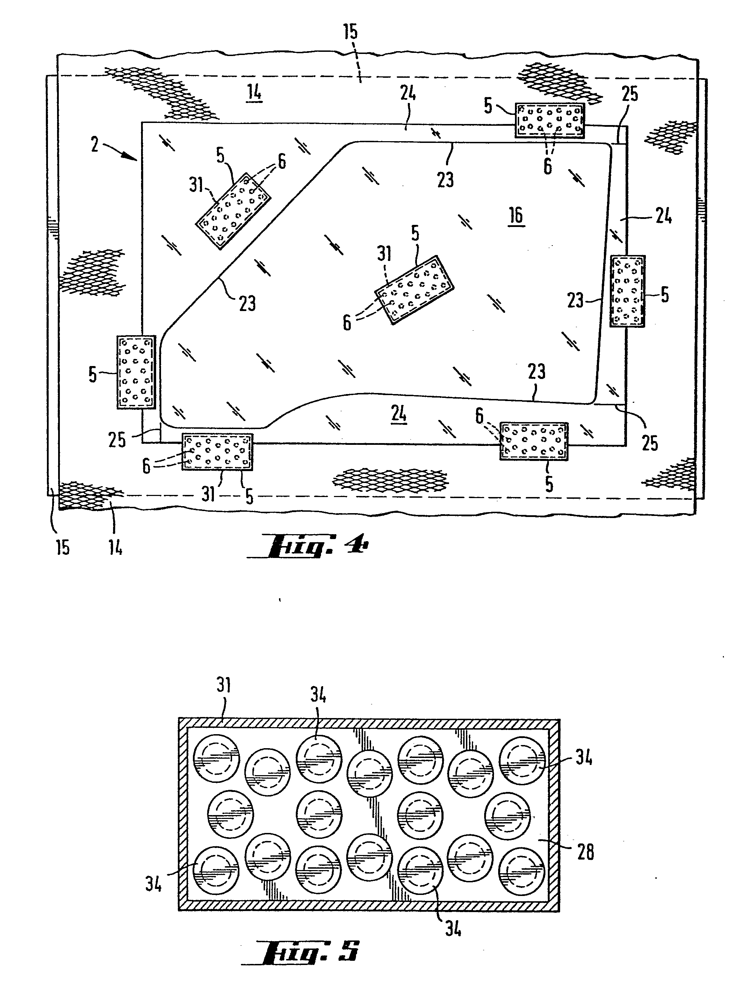

Dans la représentation donnée figure 4, il existe au milieu du tracé du volume de verre 16 un unique boîtier 5; tous les autres se trouvent en dehors du contour de découpe et la feuille de verre 2 porte des traits de découpe auxiliaire 25 qui dans le cas en question, ont été tracés d'avance au poste 3.

Les figures 3, 6 et 7 montrent la structure des boîtiers. Chacun d'eux est constitué d'une plaque frontale 27 posée sur un carter plat 28, d'une chambre d'alimentation en air 29 et d'une platine arrière 30, un cadre 31, interposé entre le carter 28 et la platine 30 fermant de façon étanche la chambre d'alimentation 29.

Dans la plaque frontale 27 sont percés des alésages 32 à l'intérieur desquels sont placés les poussoirs 6 et dans le carter 28 sont prévus des cylindres 33. Les poussoirs sont formés d'un piston 34 placé dans chaque cylindre 33, d'une tige 35 de piston qui porte à une extrémité le piston 34 et qui traverse l'alésage 32, et d'une tête interchangeable 36 avantageusement montée par emboîtement sur l'autre extrémité de la tige 35 de piston, et de préférence constituée d'une matière plastique.

Un raccord flexible 21 alimente la chambre d'alimentation 29 de chaque boîtier par l'intermédiaire d'un perçage 41 pratiqué à l'intérieur de la platine 30.

Les têtes 36 des poussoirs possèdent une extrémité 37, en tronc de cône rétréci vers le haut, d'une longueur au moins égale à l'épaisseur des feuilles de verre à découper. Cette forme crée une dépouille évitant que, si un poussoir se trouve au voisinage immédiat de la ligne de découpe, sa paroi latérale ne détériore l'arête du vitrage.

La figure 5 montre, en liaison avec la figure 4 une disposition avantageuse des poussoirs dans le boîtier 5.

Le boîtier possède une longueur de 100 à 150 mm et une largeur de 50 à 80 mm. Le diamètre des pistons 34 est de l'ordre de 10 à 20 mm, ici de 16 mm, de sorte que la pression correspondant aux forces à exercer par chacun des poussoirs varie de 1 à 4 bars, et l'espacement des axes des poussoirs est de l'ordre de 10 à 25 mm.

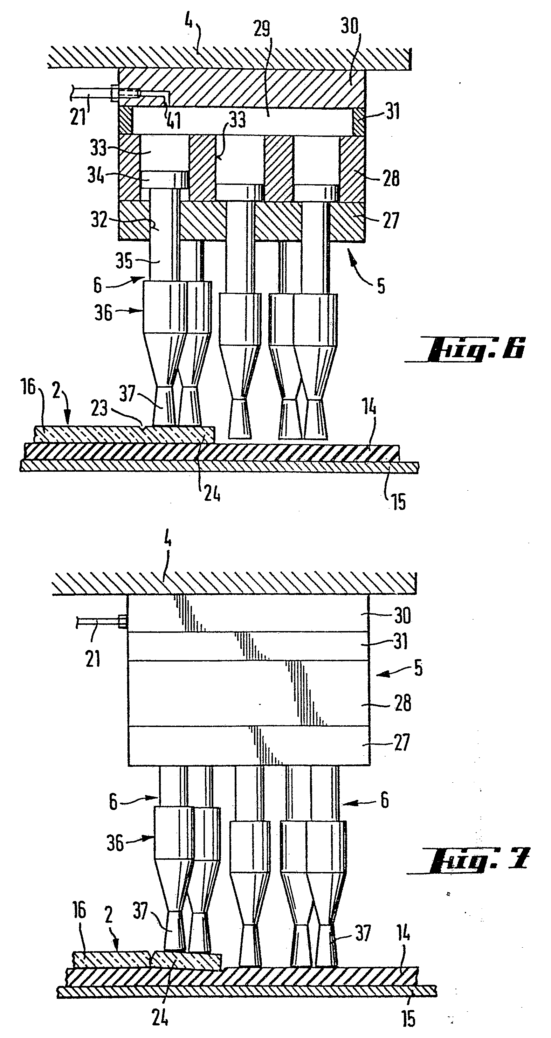

Pour effectuer le rompage, on met la chambre 29 sous pression, on descend le plateau 4 vers la feuille de verre suffisamment pour obliger les poussoirs qui entrent en contact avec la feuille de verre à reculer légèrement, lui transmettant la pression exercée par l'air comprimé dans la chambre 29 des boîtiers 5 et 5'. La figure 6 montre certains poussoirs en contact avec la feuille de verre, en position reculée, alors que les autres poussoirs, placés à l'extérieur de la feuille de verre, restent complètement sortis. Sous l'action des poussoirs qui appuient de plus en plus sur les marges 24 au fur et à mesure que le plateau descend, celles-ci sont sollicitées en flexion, elles s'enfoncent légèrement dans la couche d'appui élastique 14 et la rupture du verre se produit suivant la ligne de découpe 23.

Il est important que cette couche élastique ne soit pas trop molle afin que les marges n'y pénètrent pas trop profondément, ce qui provoquerait un écaillage de l'arête du volume de verre.

## Revendications

1. Procédé de rompage simultané des marges (24) d'une feuille de verre porteuse (2, 16) d'une ligne de découpe (23) à contour fermé, selon lequel cette feuille, reposant entièrement sur une surface plane et élastique (14), est soumise dans la zone du contour de découpe à des contraintes de flexion sous la poussée d'outils mobiles verticalement, disposés à l'intérieur (16) et à l'extérieur (24) du contour de découpe (23) et au-dessus de la feuille de verre, caractérisé en ce que chacun de ces outils est constitué d'un ensemble de poussoirs (6) rapprochés, indépendants les uns des autres, et montés souplement, poussoirs (6) dont on dispose le plus grand nombre à l'extérieur du contour de découpe (23), de façon à exercer sur les marges (24) une pression plus élevée que celle exercée sur la feuille (16) à l'intérieur du contour (23) lorsqu'on les abaisse.

2. Procédé selon la revendication 1, caractérisé en ce que la pression exercée par la descente des poussoirs (6) est réglée en fonction de l'épaisseur de la feuille de verre (2).

3. Procédé selon la revendication 2, caractérisé en ce que chaque poussoir (6) exerce une force de 25 à 100 N.

4. Procédé selon les revendications 1 à 3, caractérisé en ce que la force exercée par les poussoirs (6) est ajustée par réglage d'une pression d'air comprimé s'exerçant sur chacun d'eux.

5. Procédé selon les revendications 1 à 3, caractérisé en ce que les poussoirs (6) sont chargés par des organes mécaniques, en particulier élastiques.

6. Dispositif pour la mise en oeuvre du procédé selon la revendication 1, comprenant une surface d'appui (14) flexible et élastique reposant sur une plaque (15) de support plane, équipé d'outils de pressage placés au dessus de la feuille de verre (2) et caractérisé en ce que ces outils sont formés de poussoirs indépendants (6) les uns des autres, mobiles verticalement et repoussés élastiquement, au nombre de 5 à 20 par dm2.

7. Dispositif selon la revendication 6, caractérisé en ce que chaque poussoir (6) peut-être chargé sous une force de 25 à 100 N.

8. Dispositif selon l'une des revendications 6 et 7, caractérisé en ce que les poussoirs (6) sont montés sur un plateau commun (4) mobile verticalement et repoussés mécaniquement ou pneumatiquement vers le bas.

9. Dispositif selon l'une des revendications 6 à 8, caractérisé en ce que les poussoirs (6) sont disposés en groupes dont chacun est placé dans un boîtier propre (5, 5') monté glissant, en position réglable sur le plateau mobile (4).

10. Dispositif selon la revendication 9, caractérisé en ce que le plateau mobile (4) et la platine arrière (30) d'un boîtier (5, 5') au moins sont ferromagnétiques et solidarisés par aimantation.

11. Dispositif selon l'une des revendications 9 et 10, caractérisé en ce qu'un dispositif (12/13) de traçage d'un trait de découpe auxiliaire (25) sur les zones marginales (24) est placé sur au moins l'un des boîtiers (5').

12. Dispositif selon l'une des revendications 9 à 11, caractérisé en ce que les boîtiers (5) sont fixés sur le plateau (4), en fonction du modèle de vitrage à découper, de façon que quatre poussoirs (6) au moins, dans chaque groupe, portent sur la zone marginale (24).

13. Dispositif selon l'une des revendications 6 à 12, caractérisé en ce que quatre boîtiers (5) au moins sont disposés sur le plateau mobile (4).

14. Dispositif selon l'une des revendications 6 à 13, caractérisé en ce que, au moins pour les volumes les plus petits, un groupe de poussoirs (6) est disposé dans la partie centrale (16), à l'intérieur du contour de découpe (23).

15. Dispositif selon l'une des revendications 6 à 14, caractérisé en ce que l'extrémité inférieure (37) des poussoirs (6) présente une forme s'étrécissant vers le haut.

## Patentansprüche

1. Verfahren zum gleichzeitigen Abbrechen der Randstreifen (24) einer Glasscheibe (2, 16), mit einer Anrißlinie (23) von geschlossener Form, bei dem die ganz auf einer ebenen und elastischen Fläche (14) ruhende Scheibe im Bereich der Anrißlinie Biegekräften unter dem Druck senkrecht beweglicher Werkzeuge ausgesetzt wird, die innerhalb (16) und außerhalb (24) der Anrißlinie (23) und oberhalb der Glasscheibe angeordnet sind, dadurch gekennzeichnet, daß jedes Werkzeug aus einer Anordnung von benachbarten, voneinander unabhängigen, nachgiebig gelagerten Druckstiften (6) besteht, von denen die Mehrzahl außerhalb der Anrißlinie (23) derart angebracht ist, daß sie auf die Randstreifen (24) beim Absenken einen höheren Druck als den ausüben, der auf der Scheibe (16) innerhalb der Anrißlinie (23) ausgeübt wird.

2. Verfahren nach Anspruch 1, dadurch gekennzeichnet, daß der durch das Absenken der Druckstifte (6) ausgeübte Druck in Abhängigkeit von der Dicke der Glasscheibe (2) eingestellt wird.

3. Verfahren nach Anspruch 2, dadurch gekennzeichnet, daß jeder Druckstift einen Druck von 25 bis 100 N ausübt.

4. Verfahren nach den Ansprüchen 1 bis 3, dadurch gekennzeichnet, daß der von den Druckstiften (6) ausgeübte Druck durch Regeln von komprimierter, auf jeden der Druckstifte wirkenden Druckluft eingestellt wird.

5. Verfahren nach einem der Ansprüche 1 bis 3, dadurch gekennzeichnet, daß die Druckstifte (6) durch mechanische, insbesondere federelastische Organe beaufschlagt werden.

6. Vorrichtung zur Durchführung des Verfahrens nach Anspruch 1, mit einer beweglichen und elastischen, auf einer ebenen Tragplatte (15) angebrachten Auflagefläche (14) mit oberhalb der Glasscheibe (2) angebrachten Druckwerkzeugen, dadurch gekennzeichnet, daß die Druckwerkzeuge aus voneinander unabhängigen Druckstiften (6) in einer Menge von 5 bis 20 Stück je dm³ bestehen, die senkrecht beweglich und einzeln federnd gelagert sind.

7. Vorrichtung nach Anspruch 6, dadurch gekennzeichnet, daß jeder Druckstift mit einer Kraft von 25 bis 100 N beaufschlagbar ist.

8. Vorrichtung nach einem der Ansprüche 6 bis 7, dadurch gekennzeichnet, daß die Druckstifte (6) auf einer gemeinsamen, senkrecht beweglichen Platte (4) mechanisch oder pneumatisch abgefedert angeordnet sind.

9. Vorrichtung nach einem der Ansprüche 6 bis 8, dadurch gekennzeichnet, daß die Druckstifte (6) in Gruppen zusammengefaßt sind, wobei jede Gruppe in einem geeigneten verschiebbar montierten Gehäuse (5, 5') angebracht ist, das als solches an der senkrecht beweglichen Platte (4) verschiebbar angeordnet ist.

10. Vorrichtung nach Anspruch 9, dadurch gekennzeichnet, daß die bewegliche Platte (4) und die Kopfplatte (30) des Gehäuses (5, 5') aus ferromagnetischem Material bestehen und miteinander über Magnetkräfte fixierbar sind.

11. Vorrichtung nach einem der Ansprüche 9 und 10, dadurch gekennzeichnet, daß auf wenigstens einem der Gehäuse (5') eine Vorrichtung (12, 13) zum Ziehen einer Hilfsrißlinie (25) auf den Randstreifen (24) angeordnet ist.

12. Vorrichtung nach einem der Ansprüche 9 bis 11, dadurch gekennzeichnet, daß die Gehäuse (5) je nach der auszuschneidenden Scheibenform auf der absenkbaren Platte (4) derart angebracht sind, daß wenigstens vier Druckstifte (6) einer Gruppe auf den Randstreifen (24) zur Einwirkung kommen.

13. Vorrichtung nach einem der Ansprüche 6 bis 12, dadurch gekennzeichnet, daß wenigstens vier Gehäuse (5) auf der absenkbaren Platte (4) angeordnet sind.

14. Vorrichtung nach einem der Ansprüche 6 bis 13, dadurch gekennzeichnet, daß zumindest bei kleineren Glasscheiben eine Gruppe der Druckstifte (6) im mittleren Bereich (16) der Glasscheibe innerhalb der Anrißlinie (23) angebracht ist.

15. Vorrichtung nach einem der Ansprüche 6 bis 14, dadurch gekennzeichnet, daß das untere Ende (37) der Druckstifte (6) eine sich nach oben verjüngende Form aufweist.

## Claims

1. Method of simultaneous breaking off the margins (24) of a sheet of glass (2, 16) carrying a line of cut (23) having a closed path in which the sheet, resting entirely on a planar elastic surface (14) is subjected in the zone of said line of cut to bending stresses under the pressure of vertically movable tools arranged inside (16) and outside (24) the line of cut (23) and above the glass sheet, characterised in that each of these tools comprises a set of adjacent push members (6) of which the greater number are arranged outside the line of cut (23) so as to exercise on the margins (24) a greater pressure than that exercised on the sheet (16) inside the line (23) when they are lowered.

2. Method according to claim 1, characterised in that the pressure exerted by descent of the push members (6) is adjusted as a function of the thickness of the glass sheet (2).

3. Method according to claim 2, characterised in that each push member (6) exerts a force of from 25 to 100 N.

4. Method according to claims 1 to 3, characterised in that the force exerted by the push members (6) is adjusted by adjustment of the pressure of compressed air applied to each of them.

5. Method according to claims 1 to 3, characterised in that the push members (6) are subjected to load by mechanical members, in particular elastic members.

6. Device for carrying out the method according to claim 1, comprising a flexible elastic contact surface (14) resting on a planar support plate (15), provided with pushing tools placed above the glass sheet (2) and characterised in that these tools are formed of push members (6) which are independent of each other, movable vertically and urged elastically, at a density of 5 to 20 per dm².

7. Device according to claim 6, characterised in that each push member (6) may be loaded with a force of from 25 to 100 N.

8. Device according to one of claims 6 and 7, characterised in that the push members (6) are mounted on a common plate (4) which is movable vertically and urged downwardly mechanically or pneumatically.

9. Device according to one of claims 6 to 8, characterised in that the push members (6) are arranged in groups of which each is placed in a suitable unit (5, 5') which is slidably mounted and adjustable in position on the movable plate (4).

10. Device according to claim 9, characterised in that the movable plate (4) and the rear base (30) of at least one unit (5, 5') are ferromagnetic and held together by magnetism.

11. Device according to one of claims 9 and 10, characterised in that a device (12/13) for tracing an additional line of cut (25) on the marginal zones (24) is placed on at least one of the units (5').

12. Device according to one of claims 9 to 11, characterised in that the units (5) are fixed on the plate (4), as a function of the design of the pane to be cut out, such that at least four push members (6) in each group bear on the marginal zone (24).

13. Device according to one of claims 6 to 12, characterised in that at least four units (5) are fixed on the movable plate (4).

14. Device according to one of claims 6 to 13, characterised in that, at least for the smallest volumes, a group of push members (6) is arranged in the central part (16) inside the line of cut (23).

15. Device according to one of claims 6 to 14, characterised in that the lower end (37) of the push members (6) has an upwardly narrowing shape.

Fig. 1

Fig. 2

Fig. 3

**Fig. 4**

**Fig. 5**

*Fig. 6*

*Fig. 7*